# EUROPÄISCHE PATENTSCHRIFT

(11) **EP 1 899 036 B1**
(45) Veröffentlichungstag und Bekanntmachung des Hinweises auf die Patenterteilung: **15.08.2012**
(21) Anmeldenummer: 06761689.6
(22) Anmeldetag: 23.06.2006
(51) Int. Cl.: B01D 45/16, F02M 35/022, B04C 3/04

(54) **ALS VORFILTER DIENENDER GASEINTRITTSBEREICH EINES GASFILTERGEHÄUSES**
GAS INTAKE ZONE OF A GAS FILTER HOUSING, USED AS A PREFILTER
ZONE D'ENTREE DES GAZ D'UN CORPS DE FILTRE A GAZ UTILISE COMME PRE-FILTRE

(30) Priorität: 02.07.2005 DE 102005031059
(43) Veröffentlichungstag der Anmeldung: 19.03.2008
(73) Patentinhaber: Mahle International GmbH, 70376 Stuttgart (DE)
(72) Erfinder: ROTHER, Thilo, 71698 Ludwigsburg (DE); STEHLIG, Jürgen, 72654 Neckartenzlingen (DE); TRAUB, Matthias, 71034 Böblingen (DE)
(74) Vertreter: BRP Renaud & Partner
(86) Internationale Anmeldenummer: PCT/DE2006/001068
(87) Internationale Veröffentlichungsnummer: WO 2007/003158

(56) Entgegenhaltungen:
- EP-A- 1 500 423
- DE-A1- 2 918 765
- DE-A1- 10 235 761
- FR-A- 1 063 400
- US-A- 4 008 059
- US-A- 4 537 608
- US-A- 4 746 340

## Beschreibung

Die Erfindung betrifft einen als Vorfilter beziehungsweise Vorabscheider dienenden Gaseintrittsbereich eines ein Filterelement austauschbar lagernden, teilbaren Gasfiltergehäuses, insbesondere eines Nutzkraftfahrzeug-Ansaugluftfilters, nach dem Oberbegriff des Patentanspruchs 1.

Bekannte, derartige Vorfilter bestehen, soweit sie aus Kunststoff hergestellt sind, aus einem Grundkörper und in diesen jeweils in die Eingangsbereiche der einzelnen Zyklone eingesetzten Drallerzeugern. Da bei solchen Vorabscheidern jeweils in einem Grundkörper eine Vielzahl an Abscheide-Zyklonen vorgesehen ist, ist eine entsprechende Vielzahl an Drallerzeugern jeweils einzeln einzusetzen. Des weiteren ist bei derart bekannten Vorabscheidern das Entfernen abgeschiedener Schmutzpartikel aus dem Vorabscheider nur durch ein Absaugen möglich, da der Schmutzpartikel-Sammelraum sowohl bei geschlossenem Filtergehäuse als auch bei einem zum Zwecke eines Filterelemente-Austausches geöffneten Gehäuse stets im Inneren eines geschlossenen Vorabscheidergehäuses verbleibt. So ist der Schmutzsammelraum lediglich über eine verschließbare Reinigungsöffnung entleerbar.

Aus der DE 29 18 765 A1 ist ein Fliehkraftstaubabscheidersystem mit mehreren Stufen für luftansaugende Maschinen bekannt, wobei die einzelnen Stufen zum Herausfiltern unterschiedlicher Staubpartikelgrößen ausgebildet sind.

Die Erfindung beschäftigt sich mit dem Problem, einen gattungsgemäßen Vorabscheider, insbesondere wenn dieser aus Kunststoff bestehen soll, rationell herstellbar zu gestalten. Darüber hinaus soll ein solcher Vorabscheider einfach reinigbar sein.

Gelöst wird dieser Problemkomplex bereits in erster Linie durch die Ausführung eines gattungsgemäßen Vorabscheiders nach dem kennzeichnenden Merkmal des Patentanspruchs 1.

Vorteilhafte und zweckmäßige Ausgestaltungen sind Gegenstand der Unteransprüche.

Die Erfindung beruht auf dem allgemeinen Gedanken, den Vorabscheider in drei getrennte, aus Kunststoff herstellbare Bereiche zu unterteilen, die einfach zu einer einsatzfähigen Vorabscheidereinheit zusammenfügbar sind. Hierbei werden die Drallerzeuger zu einer einfachen Herstellbarkeit durch ein Kunststoffspritzgussverfahren auf zwei miteinander zu verbindende Bereiche, nämlich einen ersten und einen zweiten Bereich aufgeteilt. Die ersten und zweiten Bereiche sind jeweils ein einstückiges Bauteil. Hierdurch können aus Teilelementen solche zusammengesetzte Drallerzeuger spritzgegossen werden, die aufgrund ihrer hinterschnittartigen Form sonst einteilig nicht herstellbar wären.

In dem zweiten, Teilelemente der Drallerzeuger enthaltenen Bereich, sind ferner hohlzylindrische Zyklonabschnitte eingeformt, in denen sich aus der Drallströmung des Filtermediums innerhalb dieser Abschnitte zentrifugalbedingt Schmutzpartikel als Wandablagerung ansammeln können.

Der dritte, einteilige Bereich, aus dem der Vorabscheider sich erfindungsgemäß zusammensetzt, besitzt einen, an den Gaseintrittsbereich des Filtergehäuses in einen stromab des zweiten Bereiches ansetzbaren Boden mit stromaufseitig aus diesem herausragenden, durchgehend offenen Tauchrohren. Diese Tauchrohre greifen bei in den Gaseintrittsbereich des Filtergehäuses eingesetztem Zustand des dritten Bereiches in die hohlzylindrischen Zyklonabschnitte ein und bilden dort zusammen mit diesen Abschnitten Ringkanäle zum Abführen abgeschiedener Schmutzpartikel in einen Schmutzpartikelraum. Dieser Schmutzpartikelraum ist begrenzt von den Fußbereichen der Tauchrohre, dem Boden des dritten Bereiches sowie einem Bereich der Außenwand des Gaseintrittsbereiches des Filtergehäuses.

Durch eine lösbare Verbindung des dritten Bereiches gegenüber dem Gaseintrittsbereich des Filtergehäuses kann durch ein Abnehmen des dritten Bereiches von dem Filtergehäuse eine einfache Reinigung des dann offenliegenden Schmutzpartikelsammelraumes vorgenommen werden.

Das bisher übliche Einsetzen einer der Vielzahl der in dem Vorabscheider enthaltenen Abscheidezyklone entsprechenden Anzahl an Drallerzeugern wird erfindungsgemäß dadurch beseitigt, dass die Drallerzeugungselemente in Teilbereiche aufgeteilt sind, die einerseits integraler, einstückiger Bestandteil des Vorabscheidergehäuses sind und solche, die sich in dem zweiten Bereich als einem zusätzlichen, einstückigen Einsatzteil befinden, das in den Vorabscheider eingesetzt wird.

Das den zweiten Bereich bildende Zusatzteil zur Erzeugung der Drallerzeuger in dem Vorabscheider kann mit dem Vorabscheidergehäuse über Rastmittel verbunden werden. Das gleiche gilt für die Verbindung zwischen zweitem und drittem Bereich.

Ein vorteilhaftes, nachstehend näher erläutertes Ausführungsbeispiel ist in der Erfindung dargestellt.

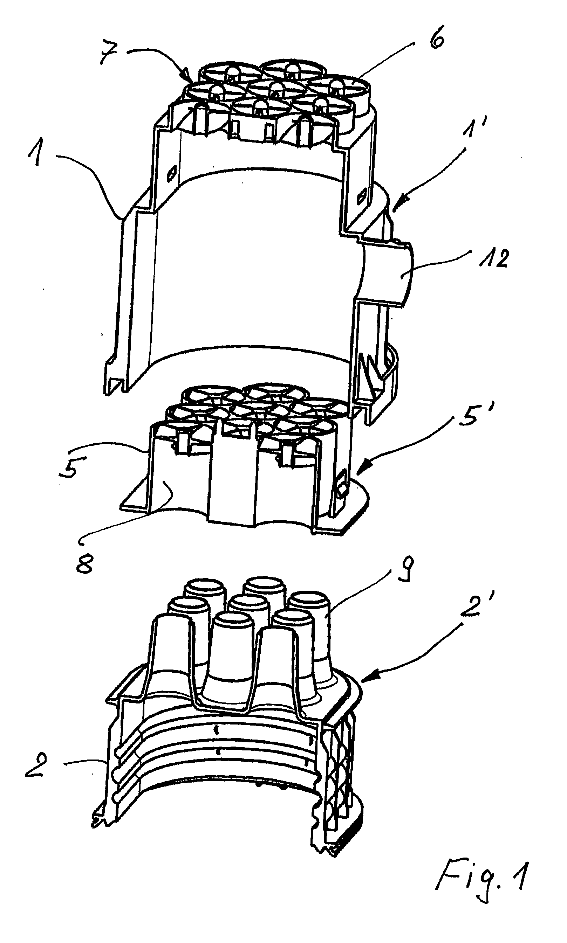

In dieser zeigen
- Fig. 1: eine Explosionsdarstellung eines als Vorabscheider dienenden Filtergehäusebereiches,
- Fig. 2: einen Schnitt durch einen Vorabscheider nach Fig. 1 in montiertem Zustand einschließlich eines austauschbar eingesetzten Filterelementes.

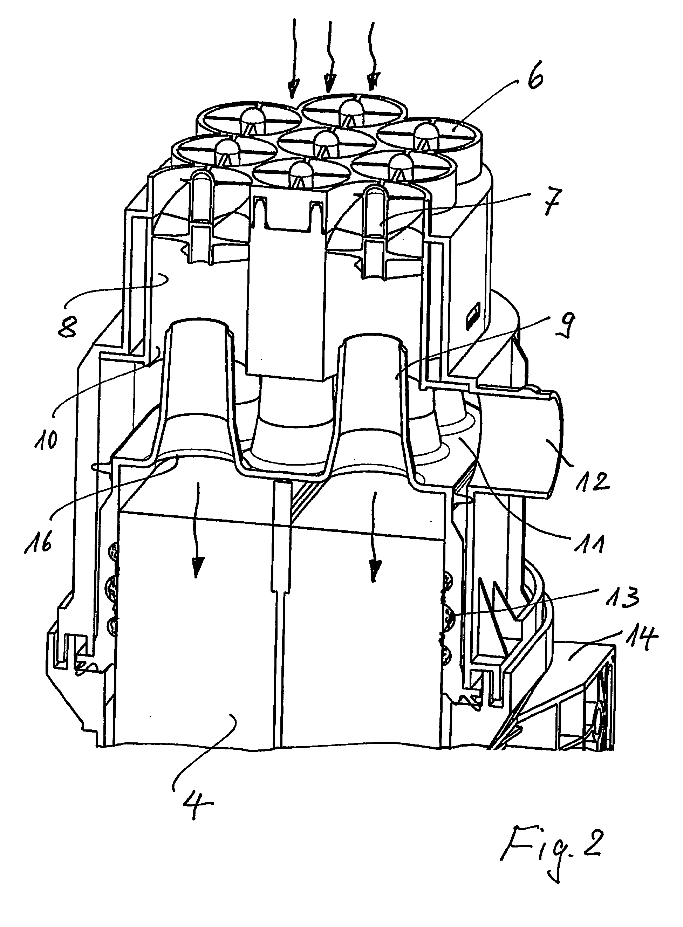

Ein als Vorabscheider dienender Gaseintrittsbereich eines Gasfiltergehäuses setzt sich zusammen aus einem Filtergehäusedeckel 1, als einem ersten Bereich 1', einem Anschlusselement 2 eines axial durchströmbaren Filterelementes 3 als einem dritten Bereich 2' mit einem Filterkern 4 aus gewickeltem Filtermaterial sowie einem Einsatzteil 5 als einem zweiten Bereich 5'. Die Bauelemente 1, 2 und 5 sind im Spritzverfahren aus Kunststoff hergestellt und bilden die ersten, zweiten und dritten Bereiche 1'; 5'; 2' im Sinne der Ausführungen in der vorausgegangenen Beschreibungseinleitung sowie der Formulierung er Patentansprüche. Bezüglich des zweiten Bereiches 5', der in dem gezeichneten Ausführungsbeispiel ein komplettes Anschlusselement 2 eines austauschbar einsetzbaren Filterelementes 3 ist, ist zu bemerken, dass dieser nicht konkret als ein solches Anschlusselement 2 vorliegen muss. Möglich ist vielmehr auch eine Ausführung, die kein mit dem Filterelement 3 fest verbundenes Element darstellt. In einem solchen Fall umfasst der dritte Bereich 2' lediglich einen Boden mit in diesen eingeformten Tauchrohren 9. Der Boden kann dann als solcher mit dem Filtergehäusedeckel 1 lösbar verbunden werden. Als Verbindungselemente können beispielsweise Rastverschlussmittel dienen. In zusammengesetztem Zustand des Vorfilters entsprechend der Darstellung in Fig. 2 tritt zu filterndes Medium, beispielsweise die Ansaugluft für einen Nutzfahrzeugmotor, durch eine Vielzahl an Einlassöffnungen 6 in den Filtergehäusedeckel 1 entsprechend den in Fig. 2 eingetragenen Strömungspfeilen in den Vorabscheider ein.

Innerhalb der Einlassöffnungen 6 befinden sich Drallerzeuger 7, die sich zusammensetzen aus einstückig in den ersten Bereich 1' des Filtergehäusedeckels 1 eingeformten ersten Elementen und stromab gelegenen zweiten Elementen, die Bestandteil des Einsatzteiles 5 als zweitem Bereich 5' sind. Beide Elemente der Drallerzeuger 7 zusammen bilden jeweils einen Drallerzeuger 7, der in dieser Form in einem einstückigen Spritzguss-Kunststoffteil nicht herstellbar wäre. Die Verbindung des Einsatzteiles 5 mit dem Filtergehäusedeckel 1 erfolgt über Rastverschlussmittel.

Stromab der aus Teilelementen des ersten und zweiten Bereiches 1'; 5" gebildeten Drallerzeuger 7 schließen sich in dem Einsatzteil 5 hohlzylindrische Strömungskanäle 8 an, in die in montiertem Zustand des Vorabscheiders Tauchrohre 9 des Anschlusselementes 2 des Filterelementes 3 eingreifen. Zwischen den Tauchrohren 9 und den Außenwänden der hohlzylindrischen Strömungskanäle 8 bildet sich jeweils bei montiertem Vorabscheider ein Ringkanal 10 aus, der jeweils in einen stromab liegenden Schmutzpartikel-Sammelraum 11 mündet. Die Begrenzungswände eines gemeinsamen SchmutzpartikelSammelraumes 11 werden zum einen von dem Anschlusselement 2 und zum anderen von dem Filtergehäusedeckel 1 gebildet. Die Teilung zwischen diesen Bauteilen, nämlich dem zweiten und dritten Bereich, ist derart vorgesehen, dass sich der Schmutzpartikel-Sammelraum 11 bei einem Abtrennen des Filterelementes 3 von dem Filtergehäusedeckel 1 - wie ein solches bei einem Filterelementaustausch erfolgt - zwangsweise großflächig öffnet. Der Schmutzpartikel-Sammelraum 11 ist bei aus dem Filtergehäusedeckel 1 abgetrenntem Filterelement 3 derart großflächig geöffnet, dass in dem Sammelraum 11 vorhandene Schmutzpartikel auf einfache Weise abgeschüttelt werden können.

Die einzelnen Strömungskanäle 8 sind jeweils zusammen mit den zugeordneten Drallerzeugern 7 sowie den Tauchrohren 10 und dem gemeinsamen Schmutzpartikel-Sammelraum 11 funktional einzelne Schmutzabscheide-Zyklonen.

Um einen Schmutzpartikel-Sammelraum 11 auch bei einem geschlossenen Filtergehäuse, das heißt geschlossenem Vorabscheider, reinigen zu können, ist ein verschließbarer Reinigungsstutzen 12 vorgesehen, durch den Schmutzpartikel in bisher üblicher Weise abgesaugt werden können.

Der Filterkern 4 des Filterelementes 3 ist derart in dem Anschlusselement 2 gelagert, dass zwischen der stirnseitigen Anströmfläche des Filterkernes 4 und den Tauchrohren 9 ein im übrigen geschlossener Anströmraum 16 vorliegt. Durch die Tauchrohre 9 in diesen Anströmraum 16 eintretendes Filtermedium kann auf diese Weise den Filterkern 4, der beispielsweise aus gewickeltem Filtermaterial besteht, in Längsrichtung entsprechend den in Fig. 2 eingetragenen Strömungspfeilen durchströmen. Zur Dichtung des vorgenannten Strömungsraumes sind zwischen einer den Filterkern 4 umschließenden Ringwand des Anschlusselementes 2 und dem Filterkern 4 Ringdichtungen 13 vorgesehen.

Mit einem Filtergehäusegrundkörper 14 ist der Filtergehäusedeckel 1 mit bekannten Schnellverschlussmitteln dicht verbindbar.

Die Verbindung zwischen dem Einsatzteil 5 als zweitem Bereich 5' und dem Filtergehäusedeckel 1 als erstem Bereich 1' kann über Rastverschlussmittel 15 auf einfache Weise erzeugt werden.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Als Vorfilter dienender Gaseintrittsbereich (1) eines ein Filterelement (3) austauschbar lagernden teilbaren Gasfiltergehäuses mit einer Vielzahl axial nebeneinanderliegender, jeweils axial angeströmter Abscheide-Zyklone mit jeweils Drallerzeugern (7) in deren Eintrittsbereichen und austrittsseitig in deren jeweiliges Innere axial eintauchenden Gasaustritts-Tauchrohren (9) innerhalb jeweils zwischen diesen Tauchrohren (9) und den jeweils zugeordneten Zyklonaußenwänden bestehenden Ringkanälen (10) zur Vorabscheidung in den einzelnen Zyklonen jeweils durch Zentrifugalkräfte nach radial außen abgetrennter Schmutzpartikel,
**dadurch gekennzeichnet, dass**
die Gesamtheit der Zyklone aus einer sich aus drei Bereichen (1'; 5'; 2';) zusammensetzenden Einheit besteht, nämlich
- einem in das Filtergehäuse einstückig eingeformten ersten Bereich (1') mit ersten Drallerzeugerteilelementen,
- einem als Einsatzteil (5) ausgebildeten zweiten Bereich (5') mit abströmseitig an die ersten Drallerzeugerteilelemente angrenzenden zweiten Drallerzeugerteilelementen, die zusammen mit den ersten Drallerzeugerteilelementen die Drallerzeuger (7) bilden und stromab der Drallerzeuger (7) liegenden, hohlzylindrischen Strömungskanälen (8) und
- einem ebenfalls als einzusetzendes Bauteil ausgebildeten, die Tauchrohre (9) enthaltenden dritten Bereich (2') mit einem die Tauchrohre (9) umschließenden Boden zur Ausbildung eines sich an die Ringkanäle (10) der Zyklone anschließenden Schmutzpartikelsammelraumes (11) innerhalb des Filtergehäuses (1)
wobei die Bereiche (1',2',5') als jeweils einstückige Kunststoffspritzgussteile ausgebildet sind.

2. Vorfilter nach Anspruch 1,
**dadurch gekennzeichnet,**
**dass** der dritte Bereich (2') fest mit dem austauschbaren Filterelement (3) verbunden ist.

3. Filterelement für ein Vorfilter nach Anspruch 2,
**dadurch gekennzeichnet,**
**dass** das Filterelement (3) einen geschlossenen, ausschließlich über die Tauchrohre (9) des dritten Bereiches (2') beströmbaren Anströmraum besitzt.

4. Vorfilter nach einem der vorhergehenden Ansprüche,
**dadurch gekennzeichnet,**
**dass** bei von dem Filtergehäuse (1) gelöstem Filterelement (3) der die Tauchrohre (9) umschließende gemeinsame Schmutzpartikel-Sammelraum (11) in Folge der Aufteilung seiner Begrenzungswände filterelemente- und filtergehäuseseitig zwangsweise großflächig geöffnet ist.

5. Vorfilter nach einem der vorhergehenden Ansprüche,
**dadurch gekennzeichnet,**
**dass** das von dem Filtergehäuse (1) lösbare, den zweiten Bereich (5') darstellende Einsatzteil (5) über an diesen beiden Bauteilen komplementär vorgesehene Rastverschlussmittel mit dem Filtergehäuse (1) verbindbar ist.

## Claims

1. A gas intake zone (1) of a separable gas filter housing which replaceably accommodates a filter element (3), wherein said gas intake zone is used as a prefilter and comprises a plurality of axially adjacent, axially flow-impinged cyclone collectors which are each provided with spin generators (7) in the inlet zones thereof, and gas discharging immersion tubes (9) at the discharge side with annular ducts (10) which are located between said immersion tubes (9) and the respectively associated outer cyclone walls while being used for preseparating dirt particles separated in an outer radial direction in the individual cyclones in each case by means of centrifugal forces, the immersion tubes being axially dipped into the interior of the cyclone collectors,
**characterized in that**
the entirety of the cyclones consists of a unit composed of three areas (1'; 5'; 2'), namely
- a first area (1') that is integrally molded into the filter housing and has first partial spin-generating elements,
- a second area (5') which is configured as an insertion part (5) and has second partial spin-generating elements which adjoin the first partial spin-generating elements in the direction of flow and, together with the first partial spin generating elements, form the spin generators (7), and hollow cylindrical ducts (8) located downstream of the spin generators (7), and
- a third area (2') which is also configured as an insertable component and contains the immersion tubes (9), and is equipped with a bottom which encloses the immersion tubes (9) so as to form a dirt particle collection chamber (11) within the filter housing (1), which said dirt particle chamber adjoins the annular ducts (10) of the cyclones,
wherein the areas (1', 2', 5') are configured in each case as integrally formed injection molded plastic parts.

2. The prefilter according to claim 1,
**characterized in**
**that** the third area (2') is fixedly connected to the replaceable filter element (3).

3. A filter element for a prefilter according to claim 2,
**characterized in**
**that** the filter element (3) has a closed flow chamber into which a flow can flow exclusively through the immersion tubes (9) of the third area (2').

4. The prefilter according to any one of the preceding claims,
**characterized in**
**that** with the filter element (3) being detached from the filter housing (1), the joint dirt particle collection chamber (11) enclosing the immersion tubes (9) is inevitably wide open on the filter element and filter housing side due to the arrangement of its bordering walls.

5. The prefilter according to any one of the preceding claims,
**characterized in**
**that** the insertion part (5), which can be detached from the filter housing (1) and represents the second area (5'), can be connected to the filter housing (1) via snap-in closure means complementarily provided on these two components.

## Revendications

1. Zone d'entrée de gaz (1) servant de préfiltre d'un logement de filtre à gaz renfermant de manière remplaçable un élément de filtre (3) comportant une pluralité de cyclones séparateurs situés côte à côte axialement et traversés axialement par un écoulement avec des générateurs de tourbillons (7) respectifs dans leurs zones d'entrée et du côté de sortie, des tubes plongeurs de sortie de gaz (9) plongeant axialement à l'intérieur de respectivement ces derniers à l'intérieur de canaux annulaires (10) constitués entre ces tubes plongeurs (9) et les parois extérieures de cyclones respectivement coordonnées à des fins de pré-séparation dans les cyclones individuels par les forces centrifuges respectives des particules d'impuretés séparées radialement vers l'extérieur,
**caractérisée en ce que**
la totalité des cyclones est constituée d'une unité composée de trois zones (1' ; 5' ; 2'), à savoir
- une première zone (1') formée en un seul tenant dans le logement de filtre comportant des éléments partiels de générateur de tourbillon,
- une deuxième zone (5') conçue comme un insert (5) avec du côté de sortie d'écoulement, des deuxièmes éléments partiels de générateur de tourbillon qui sont contigus aux premiers éléments partiels de générateur de tourbillon, qui forment conjointement aux premiers éléments partiels de générateur de tourbillon le générateur de tourbillon (7) et sont situés en aval du générateur de tourbillon (7), des canaux d'écoulement (8) cylindriques creux et
- une troisième zone (2') conçue également comme un composant à insérer, contenant les tubes plongeurs (9) avec une base englobant les tubes plongeurs (9) afin de réaliser un espace d'accumulation de particules d'impuretés (11) se rattachant aux canaux annulaires (10) des cyclones à l'intérieur du logement de filtre (1),
dans laquelle les zones (1' ; 2' ; 5') sont respectivement conçues comme des pièces moulées par injection de plastique en un seul tenant.

2. Préfiltre selon la revendication 1,
**caractérisé en ce que**
la troisième zone (2') est solidement reliée à l'élément de filtre (3) remplaçable.

3. Elément de filtre pour un préfiltre selon la revendication 2,
**caractérisé en ce que**
l'élément de filtre (3) possède un espace d'entrée d'écoulement fermé, parcouru par un écoulement exclusivement par l'intermédiaire des tubes plongeurs (9) de la troisième zone (2').

4. Préfiltre selon une des revendications précédentes,
**caractérisé en ce que**
sur l'élément de filtre (3) séparé du logement de filtre (1), l'espace d'accumulation de particules d'impuretés (11) commun englobant les tubes plongeurs (9) est ouvert à la suite de la division par contrainte sur une grande surface de ses parois de délimitation du côté des éléments de filtre et du côté du logement de filtre.

5. Préfiltre selon une des revendications précédentes,
**caractérisé en ce que**
l'insert (5) amovible du logement de filtre (1), représentant la deuxième zone (5') peut être relié au logement de filtre (1) par l'intermédiaire de moyens de fermeture par encliquetage complémentaires prévus sur ces deux composants.
